Europäisches Patentamt

European Patent Office

Office européen des brevets

(19)

(11) Veröffentlichungsnummer : **0 166 985**
**B1**

(12) **EUROPÄISCHE PATENTSCHRIFT**

(45) Veröffentlichungstag der Patentschrift :
09.09.87

(51) Int. Cl.⁴ : **B 60 T 13/52**

(21) Anmeldenummer : **85106837.9**

(22) Anmeldetag : **03.06.85**

(54) Pneumatischer Kraftverstärker, insbesondere für Bremsanlagen von Kraftfahrzeugen.

(30) Priorität : 05.06.84 DE 8417146 U

(43) Veröffentlichungstag der Anmeldung :
08.01.86 Patentblatt 86/02

(45) Bekanntmachung des Hinweises auf die Patenterteilung : 09.09.87 Patentblatt 87/37

(84) Benannte Vertragsstaaten :
DE FR GB IT

(56) Entgegenhaltungen :
DE-A- 3 232 664
GB-A- 2 075 624
US-A- 3 387 540
US-A- 4 227 371

(73) Patentinhaber : LUCAS INDUSTRIES public limited company
Great King Street
Birmingham, B19 2XF West Midlands (GB)

(72) Erfinder : Gegalski, Helmut
Mülheimerstrasse 74a
D-5403 Mülheim Kärlich 2 (DE)

(74) Vertreter : Wuesthoff, Franz, Dr.-Ing. et al
Patentanwälte Wuesthoff -v. Pechmann-Behrens-Goetz Schweigerstrasse 2
D-8000 München 90 (DE)

## Beschreibung

Die Erfindung betrifft einen pneumatischen Kraftverstärker, insbesondere für Bremsanlagen von Kraftfahrzeugen, mit

einem Gehäuse, das einen Gehäusehals aufweist, von dem eine rohrförmige Verlängerung axial nach außen ragt,

mindestens einer beweglichen Trennwand, die im Gehäuse zwei Kammern voneinander trennt, welche mit Quellen unterschiedlichen Druckes verbindbar sind,

zwei Steuerkörpern, die innerhalb des Gehäuses und seiner rohrförmigen Verlängerung in bezug zueinander axial verstellbar angeordnet sind, je einen Ventilsitz aufweisen und mit der beweglichen Trennwand und einem Kraftabgabeglied bzw. mit einem Betätigungsglied verbunden sind,

einem Ventilschließkörper, der über mindestens eine Feder am Betätigungsglied abgestützt ist und, abhängig von den Stellungen der Ventilsitze, an dem einen oder anderen von ihnen oder an beiden anliegt, wodurch die Drücke in den beiden Kammern gesteuert werden, und

einem ersten Anschlag am Betätigungsglied, der im Ruhezustand des Kraftverstärkers von der genannten Feder an einem zweiten Anschlag am vom Gehäuse entfernten Ende der rohrförmigen Verlängerung anliegend gehalten ist.

Bei einem bekannten Kraftverstärker dieser Gattung (US-A 4 227 371) ist die rohrförmige Verlängerung an einer hinteren Gehäusehälfte derart einstückig ausgebildet oder befestigt, daß der am hinteren Ende der rohrförmigen Verlängerung ausgebildete Anschlag einen vorbestimmten Abstand vom Gehäusehals hat. Das Betätigungsglied hat einen nach hinten aus der rohrförmigen Verlängerung axial herausragenden Abschnitt, der beim Betätigen des Kraftverstärkers in die rohrförmige Verlängerung hineinverschoben wird und deshalb eine Länge hat, die mindestens ebenso groß ist wie der größtmögliche Weg des Betätigungsgliedes. Erst hinter diesem verhältnismäßig langen im Ruhezustand aus der rohrförmigen Verlängerung herausragenden Abschnitt kann ein Bremspedal od. dgl. am Betätigungsglied angelenkt sein. Die gesamte Baulänge des Kraftverstärkers einschließlich Betätigungsglied ist deshalb groß.

Bei einem anderen bekannten pneumatischen Kraftverstärker, der weitgehend der eingangs beschriebenen Gattung entspricht (DE-A 3 232 664) ist am Gehäusehals anstelle einer rohrförmigen Verlängerung ein Faltenbalg befestigt, der sich nach hinten erstreckt und hinter einem zylindrischen Ventilgehäuse, das zu einem der Steuerkörper gehört, dicht an dem Betätigungsglied befestigt ist. Das Betätigungsglied ragt nach hinten nur geringfügig aus dem Faltenbalg heraus und trägt unmittelbar hinter diesem eine Lasche zur Anlenkung an einem Bremspedal. Bei Betätigung dieses Kraftverstärkers wird der Faltenbalg nach vorne zusammengedrückt, so daß er dem Betätigungsglied nicht im Wege steht. Nach einer Betätigung dieses bekannten Kraftverstärkers bewegt sich das Betätigungsglied soweit zurück, daß der mit ihm verbundene Steuerkörper mit seinem Ventilsitz den Ventilschließkörper um eine erhebliche Strecke vom Ventilsitz des anderen Steuerkörpers abhebt. Dies hat zur Folge, daß die beiden Kammern des Gehäuses miteinander verbunden werden und ein in der vorderen dieser Kammern herrschender Unterdruck sich uneingeschränkt auch in der hinteren Kammer ausbreitet. Bei erneuter Betätigung des Kraftverstärkers muß das Betätigungsglied die genannte Strecke in umgekehrter Richtung zurücklegen, ehe das Ventilschließglied die Verbindung zwischen den beiden Kammern unterbricht und anschließend die hintere von ihnen mit der umgebenden Atmosphäre verbindet, um zwischen den beiden Kammern einen Druckunterschied zu erzeugen, aus dem sich die gewünschte Kraftverstärkung ergibt.

Ein solcher Leerweg läßt sich bei dem zuerst beschriebenen bekannten Kraftverstärker (US-A-4 227 371) nahezu vollständig vermeiden, indem die hintere Endstellung des Betätigungsgliedes durch den an diesem befestigten Anschlag und den damit zusammenwirkenden Anschlag am vom Gehäuse entfernten Ende der rohrförmigen Verlängerung derart festgelegt wird, daß beide Ventilsitze in einer Steuerstellung verharren, in der sie das Ventilschließglied gleichzeitig berühren. Damit wird erreicht, daß der Kraftverstärker sofort anspricht, d. h. praktisch ohne Leerhub des Betätigungsgliedes und ohne Zeitverlust.

Der Erfindung liegt die Aufgabe zugrunde, die Baulänge eines Kraftverstärkers der eingangs beschriebenen Gattung einschließlich seines Betätigungsgliedes zu verringern, ohne das beschriebene verzögerungslose Ansprechverhalten preiszugeben.

Die Aufgabe ist, ausgehend von einem pneumatischen Kraftverstärker der eingangs beschriebenen Gattung, erfindungsgemäß dadurch gelöst, daß die rohrförmige Verlängerung vom Gehäusehals umschlossen, aus einer Endstellung, die sie im Ruhezustand einnimmt, teleskopartig in das Gehäuse einfahrbar und gegen den Gehäusehals abgedichtet geführt ist.

Damit wird erreicht, daß die rohrförmige Verlängerung mit ihrem hinteren Anschlag zwar im Ruhezustand die Stellung des Betätigungsgliedes und somit auch der Ventilsitze genau festlegt, bei Betätigung jedoch im wesentlichen die gleiche Bewegung wie das Betätigungsglied ausführt, so daß dieses keinen aus der rohrförmigen Verlängerung herausragenden Abschnitt von erheblicher Länge aufzuweisen braucht.

Beim Gegenstand der Erfindung kann ebenso wie bei dem eingangs beschriebenen bekannten Kraftverstärker der mit der beweglichen Trennwand verbundene Steuerkörper ein in die rohrförmige Verlängerung hineinragendes, gegen diese abgedichtetes zylindrisches Ventilgehäuse aufweisen. Für diesen Fall ist die Erfindung zweckmäßigerweise dadurch weitergebildet, daß die rohrförmige Verlängerung auf dem Ventilgehäuse geführt und zusammen mit diesem und dem zugehörigen Steuerkörper gegenüber dem Gehäuse begrenzt kippbar ist. Dadurch wird jegliche Verspannung oder Verklemmung bei Achsfluchtungsfehlern zwischen dem Gehäuse und den ihm gegenüber axial verschiebbaren Bauteilen vermieden.

Ferner kann bei dem Erfindungsgegenstand auch das Merkmal des eingangs beschriebenen bekannten Kraftverstärkers verwendet werden, daß der mit der beweglichen Trennwand verbundene Steuerkörper zwischen seinem Ventilsitz und einer der beiden Kammern einen radialen Kanal aufweist. In diesem Fall ist der erfindungsgemäße Kraftverstärker zweckmäßigerweise dadurch weitergebildet, daß die rohrförmige Verlängerung nahe ihrem gehäuseseitigen Ende einen Vorsprung aufweist, der in den radialen Kanal hineinragt und axiale Relativbewegungen zwischen der rohrförmigen Verlängerung und dem mit der beweglichen Trennwand verbundenen Steuerkörper begrenzt.

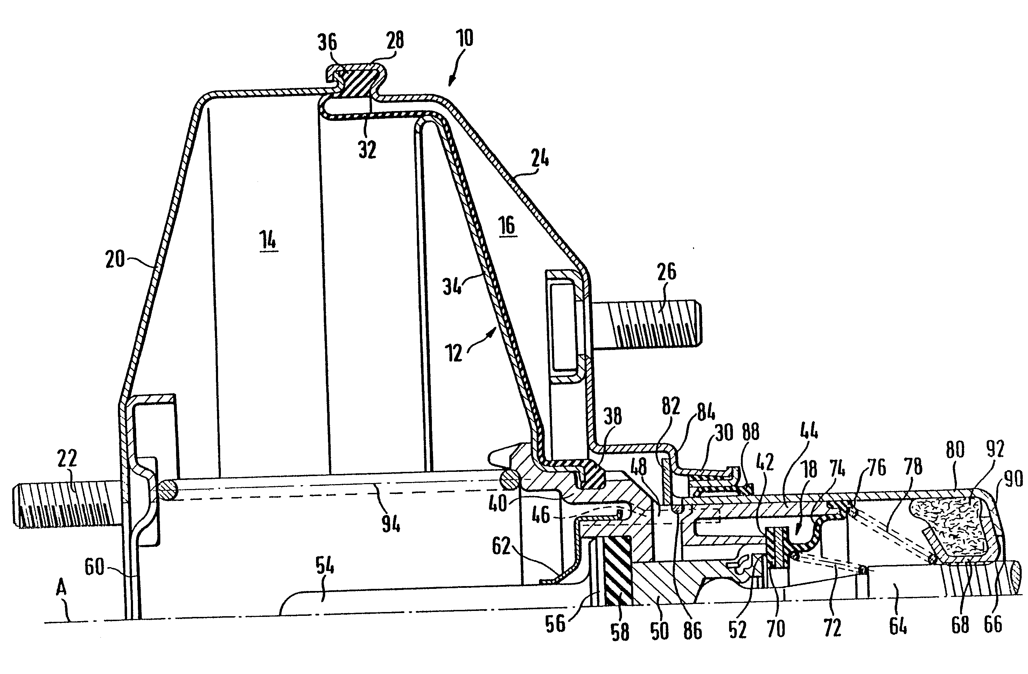

Ein Ausführungsbeispiel der Erfindung wird im folgenden anhand einer schematischen Zeichnung mit weiteren Einzelheiten erläutert. In der Zeichnung ist ein pneumatischer Kraftverstärker für die Bremsanlage eines Kraftfahrzeugs in halbseitigem Axialschnitt dargestellt.

Der dargestellte Kraftverstärker ist insgesamt im wesentlichen rotationssymmetrisch in bezug auf eine Achse A und hat ein Gehäuse 10, in dem eine bewegliche Wand 12 eine vordere Kammer 14 und eine hintere Kammer 16 voneinander trennt und eine Ventilanordnung 18 beide Kammern wahlweise miteinander verbindet oder voneinander getrennt hält. Die vordere Kammer 14 ist ständig mit einer Unterdruckquelle, beispielsweise einem Saugrohr eines Verbrennungsmotors verbunden ; die hintere Kammer 16 läßt sich durch die Ventilanordnung 18 wahlweise mit der vorderen Kammer 14 oder mit der umgebenden Atmosphäre verbinden.

Das Gehäuse 10 hat ein vorderes Gehäuseteil 20, mit dem achsparallele Gewindebolzen 22 zum Befestigen eines nicht dargestellten Hauptbremszylinders vernietet sind, sowie ein hinteres Gehäuseteil 24, mit dem ebenfalls achsparallele Gewindebolzen 26 zur Befestigung des Bremskraftverstärkers an einem Fahrzeugteil, beispielsweise einer Spritzwand, vernietet sind. Das hintere Gehäuseteil 24 hat einen äußeren Bördelrand 28, der die beiden Gehäuseteile 20 und 24 zusammenhält, sowie einen nach hinten ragenden Gehäusehals 30.

Zur beweglichen Trennwand 12 gehören eine Membran 32 aus einem Elastomer sowie eine Stützplatte 34. Die Membran 32 hat einen äußeren Randwulst 36, der im Bereich des Bördelrandes 28 zwischen den Gehäuseteilen 20 und 24 dicht eingespannt ist, sowie einen inneren Randwulst 38, der zusammen mit der Stützplatte 34 an einem mittig angeordneten, äußeren Steuerkörper 40, befestigt ist und gegen diesen ebenfalls abdichtet.

Am äußeren Steuerkörper 40 ist ein nach hinten weisender ringförmiger äußerer Ventilsitz 42 sowie ein diesen umschließendes, nach hinten offenes Ventilgehäuse 44 ausgebildet. Der Ringraum zwischen äußerem Ventilsitz 42 und Ventilgehäuse 44 ist durch mindestens einen achsparallelen Kanal 46 mit der vorderen Kammer 14 verbunden. Der Raum unmittelbar innerhalb des ringförmigen äußeren Ventilsitzes 42 ist durch mindestens einen zunächst ebenfalls achsparallel nach hinten führenden und dann radialen Kanal 48 mit der hinteren Kammer 16 verbunden.

Innerhalb des äußeren Steuerkörpers 40, gleichachsig mit diesem, ist ein innerer Steuerkörper 50 angeordnet, der einen ebenfalls nach hinten weisenden ringförmigen inneren Ventilsitz 52 aufweist. Beide Steuerkörper 40 und 50 sind in bezug zueinander und zum Gehäuse 10 axial verschiebbar.

Dem äußeren Steuerkörper 40 ist ein axial angeordnetes, stangenförmiges Kraftabgabeglied 54 zugeordnet, das sich mit einer an ihm ausgebildeten Fußplatte 56 an einem Elastomerkörper 58 abstützt. Der Elastomerkörper 58 ist im äußeren Steuerkörper 40 zwischen der Fußplatte 56 und dem inneren Steuerkörper 50 hohlraumfrei aufgenommen und ist im Durchmesser ebenso groß wie die Fußplatte 56 und erheblich größer als der innere Steuerkörper 50. Der Elastomerkörper 58 bildet somit einen quasihydraulischen Kraftübersetzer zwischen dem inneren Steuerkörper 50 und der Fußplatte 56 des Kraftabgabegliedes 54.

Das Kraftabgabeglied 54 wirkt mit dem erwähnten, nicht dargestellten Hauptbremszylinder zusammen, der durch eine Aussparung 60 des vorderen Gehäuseteils 20 hineinragt. Vor dem Einbau des Hauptbremszylinders ist das Kraftabgabeglied 54 durch eine am äußeren Steuerkörper 40 befestigte Sicherungskappe 62 gegen Herausfallen gesichert.

Am inneren Steuerkörper 50 ist ein stangenförmiges Betätigungsglied 64 gelenkig befestigt. Das Betätigungsglied 64 erstreckt sich axial nach hinten und hat einen Gewindeabschnitt 66, auf den ein mutterartiger erster Anschlag 68 von radial nach außen offenem, annähernd U-förmigem Querschnitt aufgeschraubt ist.

Den beiden ringförmigen Ventilsitzen 42 und 52 ist ein gemeinsamer, ebenfalls ringförmiger Ventilschließkörper 70 zugeordnet, der rings um das Betätigungsglied 64 angeordnet und an diesem durch eine vordere Feder 72 in Form einer Kegelschraubenfeder derart abgestützt ist, daß er stets an mindestens einem der beiden Ventilsitze 42 und 52 anliegt. Der Ventilschließkörper 70 ist als Elastomerkörper mit Metaleinlage einstückig mit einer Schlauchmembran 74 ausgebildet, die einen Randwulst 76 aufweist und mit diesem über den hinteren Rand des Ventilgehäuses 44 greift. Zwischen dem Randwulst 76 und dem mutterartigen Anschlag 68 ist eine hintere Feder 78 eingespannt, die ebenfalls die Form einer Kegelschraubenfeder hat und für eine dichte Anlage des Randwulstes am Ventilgehäuse 44 sorgt.

Im Gehäusehals 30 ist teleskopartig verschiebbar eine rohrförmige Verlängerung 80 geführt, die sich axial nach hinten erstreckt und an ihrem vorderen Ende einen Flansch 82 aufweist, der in der abgebildeten Ruhestellung des Bremskraftverstärkers an einer Schulter 84 am Übergang zwischen Gehäusehals 30 und hinterem Gehäuseteil 24 anliegt. Unmittelbar hinter dem Flansch 82 ist an der rohrförmigen Verlängerung 80 ein radial nach innen ragender Vorsprung 86 ausgebildet, der in den radialen Kanal 48 des äußeren Steuerkörpers 40 eingreift und diesem eine begrenzte axiale Relativverschiebung in beiden Richtungen ermöglicht.

Der Hauptteil der rohrförmigen Verlängerung 80 ist ein innen und außen glatter Zylinder, der außen durch eine handelsübliche Lippendichtung 88 gegen den Gehäusehals 30 und innen durch den Randwulst 76 gegen das Ventilgehäuse 44 abgedichtet ist.

Am hinteren Ende der rohrförmigen Verlängerung 80 ist ein zweiter Anschlag 90 in Form eines ungefähr radial nach innen ragenden Kragens ausgebildet, an dem der Anschlag 68 in der abgebildeten Ruhestellung des Kraftverstärkers anliegt. Innerhalb des von den Anschlägen 68 und 90 umschlossenen Raumes ist ein Staubfilter 92 angeordnet, durch den Umgebungsluft jedenfalls bis zum Ventilschließkörper 70 strömen kann.

Die abgebildete Ruhestellung der beschriebenen beweglichen Bauteile wird von einer Rückstellfeder 94 aufrechterhalten, die zwischen dem vorderen Gehäuseteil 20 und dem äußeren Steuerkörper 40 mit einer axialen Vorspannkraft eingebaut ist, die erheblich größer ist als die Summe der Kräfte der beiden Federn 72 und 78.

Wenn der Motor des Fahrzeugs, in das der dargestellte Kraftverstärker eingebaut ist, nach längerem Stillstand in Betrieb gesetzt wird, entsteht in der vorderen Kammer 14 ein Unterdruck, während in der hinteren Kammer 16 zunächst noch Atmosphärendruck herrscht. Infolge dieses Druckunterschiedes wird die bewegliche Trennwand 12, und mit ihr der äußere Steuerkörper 40, um eine kaum wahrnehmbare Strecke nach vorne verschoben, so daß die hintere Kammer 16 über den radialen Kanal 48, den sich öffnenden Spalt zwischen dem äußeren Ventilsitz 42 und dem Ventilschließkörper 70 und schließlich über den achsparallelen Kanal 46 in die vordere Kammer 14 entlüftet wird, bis der Druckunterschied zwischen den beiden Kammern, soweit vermindert ist, daß die Rückstellfeder 94 imstande ist, wieder den Ausgangszustand herzustellen, in dem beide Ventilsitze 42 und 52 am Ventilschließkörper 70 anliegen.

Wenn nun zur Betätigung der Bremsen des Fahrzeugs das Betätigungsglied 64 nach vorne verschoben wird, löst sich der innere Ventilsitz 52 sofort vom Ventilschließkörper 70, der daraufhin mit der gesamten Kraft der Feder 72 nur noch gegen den äußeren Ventilsitz 42 gedrückt wird.

Deshalb strömt ohne merkliche Verzögerung Umgebungsluft am Ventilschließkörper 70 vorbei durch den radialen Kanal 48 in die hintere Kammer 16, während die vordere Kammer 14 entlüftet bleibt, so daß der zur Verstärkung der Bremsbetätigungskraft erforderliche Druckunterschied zwischen den beiden Kammern schon von Beginn der axialen Vorwärtsbewegung des Betätigungsgliedes 64 an aufgebaut wird.

Bei großer Hubbewegung des Betätigungsgliedes 64 bewegt sich die rohrförmige Verlängerung 80 ebenfalls nach vorne, so daß die Vorwärtsbewegung des Betätigungsgliedes 64 nicht behindert wird. Im Gehäuse 10 wird der zur Aufnahme eines größeren Teils der rohrförmigen Verlängerung 80 erforderliche Raum durch die Vorwärtsbewegung der beweglichen Trennwand 12 und des äußeren Steuerkörpers 40 freigegeben.

**Patentansprüche**

1. Pneumatischer Kraftverstärker, insbesondere für Bremsanlagen von Kraftfahrzeugen mit einem Gehäuse (10), das einen Gehäusehals (30) aufweist, von dem eine rohrförmige Verlängerung (80) axial nach außen ragt, mindestens einer beweglichen Trennwand (12), die im Gehäuse (10) zwei Kammern (14, 16) voneinander trennt, welche mit Quellen unterschiedlichen Druckes verbindbar sind, zwei Steuerkörpern (40, 50), die innerhalb des Gehäuses (10) und seiner rohrförmigen Verlängerung (80) in bezug zueinander axial verstellbar angeordnet sind, je einen Ventilsitz (42, 52) aufweisen und mit der beweglichen Trennwand (12) und einem Kraftabgabeglied (54) bzw. mit einem Betätigungsglied (64) verbunden sind, einem Ventilschließkörper (70) der über mindestens eine Feder (72) am Betätigungsglied (64) abgestützt ist und abhängig von den Stellungen der Ventilsitze (42, 52) an dem einen oder anderen von ihnen oder an beiden anliegt, wodurch die Drücke in den beiden Kammern (14, 16) gesteuert werden, und einem ersten Anschlag (68) am Betätigungsglied (64), der im Ruhezustand des Kraftverstärkers von der genannten Feder (72) an einem zweiten Anschlag (90) am vom Gehäuse (10) entfernten Ende der rohrförmigen Verlängerung (80) anliegend gehalten ist, dadurch gekennzeichnet, daß die rohrförmige Verlängerung (80) vom Gehäusehals (30) umschlossen, aus einer Endstellung, die sie im Ruhezustand einnimmt, teleskopartig in das Gehäuse (10) einfahrbar und gegen den Gehäusehals (30) abgedichtet geführt ist.

2. Kraftverstärker nach Anspruch 1, bei dem der mit der beweglichen Trennwand (12) verbundene Steuerkörper (40) ein in die rohrförmige Verlängerung (80) hineinragendes, gegen diese abgedichtetes zylindrisches Ventilgehäuse (44) aufweist, dadurch gekennzeichnet, daß die rohrförmige Verlängerung (80) auf dem Ventilgehäuse (44) geführt und zusammen mit diesem und dem zugehörigen Steuerkörper (40) gegenüber dem Gehäuse (10) begrenzt kippbar ist.

3. Kraftverstärker nach Anspruch 1 oder 2, bei dem der mit der beweglichen Trennwand (12) verbundene Steuerkörper (40) zwischen seinem Ventilistz (42) und einer der beiden Kammern (16) einen radialen Kanal (48) aufweist,
dadurch gekennzeichnet, daß die rohrförmige Verlängerung (80) nahe ihrem gehäuseseitigen Ende einen Vorsprung (86) aufweist, der in den radialen Kanal (48) hineinragt und axiale Relativbewegungen zwischen der rohrförmigen Verlängerung (80) und dem mit der beweglichen Trennwand (12) verbundenen Steuerkörper (40) begrenzt.

4. Kraftverstärker nach Anspruch 1, bei dem der mit der beweglichen Trennwand (12) verbundene Steuerkörper (40) ein in die rohrförmige Verlängerung (80) hineinragendes zylindrisches Ventilgehäuse (44) aufweist,
dadurch gekennzeichnet, daß das zylindrische Ventilgehäuse (44) gegen die rohrförmige Verlängerung (80) durch einen Randwulst (76) des Ventilschließkörpers (70) abgedichtet ist.

5. Kraftverstärker nach Anspruch 4,
dadurch gekennzeichnet, daß der Randwulst (76) eine dichtende Rückbewegung zwischen der rohrförmigen Verlängerung (80) und dem zylindrischen Ventilgehäuse (44) zuläßt.

6. Kraftverstärker nach Anspruch 5,
dadurch gekennzeichnet, daß der Randwulst (76) an einer mit dem Ventilschließkörper (70) einstückig verbundenen Schlauchmembran (74) ausgebildet ist.

## Claims

1. A pneumatic power booster, particularly for brake installations of motor vehicles, comprising
a housing (10) having a housing neck (30) from which a tubular elongation (80) projects axially outwardly,
at least one movable partition wall (12) separating two chambers (14, 16) in the housing (10) from each other which chambers are adapted to be connected to sources of different pressure,
two control members (40, 50) arranged to be axially adjustable with respect to each other within the housing (10) and its tubular elongation (80), have a valve seat (42, 52) each, and are connected with the movable partition wall (12) as well as an output member (54) and an actuating member (64), respectively,
a valve closing member (70) bearing against the actuating member (64) via at least one spring (72) and depending on the positions of the valve seats (42, 52) abutting against the one or other or both of the valve seats, the pressures in the two chambers (14, 16) being controlled in this manner, and
a first stop (68) at the actuating member (64) which in the rest condition of the power booster is held in abutment against a second stop (90) at the end of the tubular elongation (80) remote from the housing by means of said spring (72), characterized in that the tubular elongation (80) is surrounded by the housing neck (30), is adapted to be telescoped into the housing from an end position which it assumes in the rest condition, and is guided so as to be sealed against the housing neck (30).

2. The power booster as claimed in claim 1, in which the control member (40) connected to the movable partition wall (12) comprises a cylindrical valve housing (44) projecting into the tubular elongation (80) and sealed with respect to the same,
characterized in that the tubular elongation (80) is guided on the valve housing (44) and is tiltable to a limited extent with respect to the housing (10) together with the valve housing (44) and the respective control member (40).

3. The power booster as claimed in claim 1 or claim 2, in which the control member (40) connected to the movable partition wall (12) is provided with a radial channel (48) between its valve seat (42) and one of the two chambers (16), characterized in that the tubular elongation (80), close to its end near the housing, is provided with a protrusion (86) which projects into the radial channel (48) and limits axial relative movements between the tubular elongation (80) and the control member (40) connected to the movable partition wall (12).

4. The power booster as claimed in claim 1, in which the control member (40) connected to the movable partition wall (12) is provided with a cylindrical valve housing (44) projecting into the tubular elongation (80),
characterized in that the cylindrical valve housing (44) is sealed with respect to the tubular elongation (80) by a marginal bead (76) of the valve closing member (70).

5. The power booster as claimed in claim 4, characterized in that the marginal bead (76) allows a sealing return movement between the tubular elongation (80) and the cylindrical valve housing (44).

6. The power booster as claimed in claim 5, characterized in that the marginal bead (76) is formed on a tubular diaphragm (74) integral with the valve closing member (70).

## Revendications

1. Amplificateur pneumatique de force, en particulier pour installations de freinage de véhicules motorisés comportant
un carter (10) qui présente un col de carter (30) d'où dépasse axialement vers l'extérieur un prolongement tubulaire (80),
au moins une cloison mobile (12) qui sépare l'une de l'autre dans le carter (10) deux chambres (14, 16) qui peuvent être reliées avec des sources de pression différente,
deux pièces de commande (40, 50), qui sont disposées avec possibilité de se déplacer axialement l'une par rapport à l'autre à l'intérieur du carter (10) et de son prolongement tubulaire (80), qui présentent chacune un siège de soupape (42, 52) et qui sont reliées avec la cloison mobile (12) et avec un organe de transmission de la force (54) ou avec un organe de manoeuvre (64), respectivement,

un obturateur de soupape (70) qui s'appuie contre l'organe de manœuvre (64) par l'intermédiaire d'au moins un ressort (72) et qui, en fonction des positions des sièges de soupape (42, 52), s'appuie contre l'un ou contre l'autre de ces sièges ou contre les deux, ce par quoi on peut commander les pressions dans les deux chambres (14, 16), et

une première butée (68), sur l'organe de manœuvre (64), qui, à l'état de repos de l'amplificateur de force, est maintenue, par le ressort mentionné (72), appuyée contre une seconde butée (90) prévue à l'extrémité, éloignée du carter (10), du prolongement tubulaire (80),

caractérisé en ce que le prolongement tubulaire 80 est entouré par le col du carter (30), peut rentrer télescopiquement dans le carter (10) à partir d'une position extrême qu'il prend à l'état de repos et passe avec étanchéité à l'égard du col du carter (30).

2. Amplificateur de force selon la revendication 1, dans lequel la pièce de commande (40) liée à la cloison mobile (12) présente un carter de soupape cylindrique (44) qui pénètre dans le prolongement tubulaire (80) et qui est étanche à l'égard de ce prolongement,

caractérisé en ce que le prolongement tubulaire (80) est guidé sur le carter de soupape (44) et, conjointement avec celui-ci et avec la pièce de commande correspondante (40), peut effectuer un mouvement limité de basculement par rapport au carter (10).

3. Amplificateur de force selon la revendication 1 ou 2, dans lequel la pièce de commande (40) reliée à la cloison mobile (12) présente, entre son siège de soupape (42) et l'une des deux chambres (16), un canal radial (48),

caractérisé en ce que le prolongement tubulaire (80) présente, près de son extrémité côté carter, une saillie (86) qui pénètre dans le canal radial (48) et limite les déplacements relatifs axiaux entre le prolongement tubulaire (80) et la pièce de commande (40) reliée à la cloison mobile (12).

4. Amplificateur de force selon la revendication 1, dans lequel la pièce de commande (40) reliée à la cloison mobile (12) présente un carter de soupape cylindrique (44) qui pénètre dans le prolongement tubulaire (80),

caractérisé en ce que le carter de soupape cylindrique (44) est rendu étanche à l'égard du prolongement tubulaire (80) par un bourrelet de bordure (76) de l'obturateur de soupape (70).

5. Amplificateur de force selon la revendication 4,

caractérisé en ce que le bourrelet de bordure (76) autorise un mouvement de rappel étanche entre le prolongement tubulaire (80) et le carter de soupape cylindrique (44).

6. Amplificateur de force selon la revendication 5,

caractérisé, en ce que le bourrelet de bordure (76) est venu de forme sur une membrane tubulaire (74) reliée d'une pièce à l'obturateur de soupape (70).

0 166 985